# EUROPEAN PATENT SPECIFICATION

(11) **EP 3 052 305 B1**
(45) Date of publication and mention of the grant of the patent: **19.09.2018**
(21) Application number: 14851148.8
(22) Date of filing: 24.09.2014
(51) Int. Cl.: B29C 70/48, B29C 33/38

(54) **FLEXIBLE RESIN TRANSFER MOLDING TOOL**
FLEXIBLES HARZTRANSFERFORMWERKZEUG
OUTIL DE MOULAGE PAR TRANSFERT DE RÉSINE SOUPLE

(30) Priority: 04.10.2013 US 201361886761 P
(43) Date of publication of application: 10.08.2016
(73) Proprietor: United Technologies Corporation, Farmington, CT 06032 (US)
(72) Inventor: MCCAFFREY, Michael G., Windsor, Connecticut 06095 (US)
(74) Representative: Dehns
(86) International application number: PCT/US2014/057185
(87) International publication number: WO 2015/050760

(56) References cited:
- JP-A- H0 810 377
- JP-A- 2012 158 037
- KR-A- 20100 132 019
- US-A- 2 472 754
- US-A- 4 969 972
- US-A- 5 441 692
- US-A1- 2009 309 264
- US-A1- 2012 048 457

## Description

The present invention relates to a resin transfer molding tool according to claim 1 and to a flexible resin transfer tool according to claim 10.

### BACKGROUND

A resin transfer molding process begins with a fibrous pre-form that is inserted into a rigid mold die piece mold. In the mold, resin is injected at a low temperature into the pre-mold and cured. The curing process changes the resin into a pre-ceramic polymer material. The pre-ceramic polymer material is rigid and allows the part to be removed from the mold tool and pyrolized at very high temperatures. The pyrolized process at high temperature is conducted outside of the tool and converts the pre-ceramic polymer into a ceramic material. During the pyrolysis operation, a significant amount of polymer shrinkage occurs as it is converted into a ceramic material. The significant amount of shrinkage causes porosity including pores and cracks formed within the ceramic matrix.

After the first pyrolysis process, additional polymer infiltration processes are utilized to fill the pores and cracks that exist in the ceramic matrix from the first process. Additional cycles of the polymer infiltration and pyrolysis process are executed to increase the density and reduce the porosity within the part. However, each high temperature pyrolysis process causes distortion of the part and prevents the part from being reinserted into the original rigid tool utilized to inject resin into the pre-form. Accordingly, the current practice is to simply dip a part into resin, remove from the resin, and pyrolize outside of a rigid tool. However, such processes do not retain sufficient amount of liquid resin within the cores, voids and cracks of the ceramic part to adequately fill and provide the desired density of the completed part. Moreover, such a process often results in significant amounts of pre-ceramic polymer on outer surfaces of the ceramic part that must be machined or otherwise removed prior to the next pyrolysis operation.

Accordingly, it is desirable to develop a re-infiltration tool to inject resin into a ceramic part to fill voids that minimizes the use of excess resin and provides for the more efficient infusion of resin into the cracks and voids formed within the part.

A resin transfer molding tool and a flexible transfer tool are known from document US 2012/0048457 A1.

### SUMMARY

A resin transfer molding tool according to an exemplary embodiment of this disclosure, among other possible things includes a mold defining an internal cavity of a fixed geometry, and a bladder configured to be received within the internal cavity and define a flexible interface surface for surrounding a molded article. The bladder is fillable with a fluid material to exert a pressure on a surface of the molded article within the mold.

In a further embodiment of the foregoing, the internal cavity is larger than the desired completed molded article in at least one dimension. The bladder is configured to fill any gap between the internal cavity and a molded article.

In a further embodiment of any of the foregoing, a resin injecting device is configured for injecting resin into a molded article within the bladder and mold.

In a further embodiment of any of the foregoing, a vacuum device is configured to apply a vacuum pressure to a molded article received within the bladder while within the mold.

In a further embodiment of any of the foregoing, the resin transfer molding tool includes a pressure application device for applying a pressure to fluid within the bladder when received within the mold.

In a further embodiment of any of the foregoing, the pressure application device is configured to apply pressure to fluid within the bladder in a cyclic manner.

In a further embodiment of any of the foregoing, the pressure application device is configured to apply pressure to the fluid with the bladder in a static manner.

In a further embodiment of any of the foregoing, the bladder is configured to receive the molded article before insertion into the mold.

In a further embodiment of any of the foregoing, the bladder includes a reinforcement element defining a desired geometry of the bladder.

In a further embodiment of any of the foregoing, the fluid within the bladder is a pre-ceramic resin.

A flexible resin transfer tool according to an exemplary embodiment of this disclosure, among other possible things includes a first mold including a first internal cavity for receiving a pre-mold and infusing resin into the pre-mold to form a ceramic article, a second mold defining a second internal cavity including a fixed geometry, a bladder receivable within the second internal cavity that defines a part cavity for receiving the ceramic article. The bladder includes a variable internal and external geometry for filling gaps between the second internal cavity and the ceramic article and a resin injection device for injecting resin into voids in the ceramic article within the bladder and the second internal cavity.

In a further embodiment of the foregoing, the bladder is fillable with a pre-ceramic resin for applying a pressure to a surface of the ceramic article to hold uncured resin within the ceramic article until cured.

In a further embodiment of any of the foregoing, the flexible resin transfer tool includes a pressure application device for applying a pressure to fluid within the bladder when received within the mold.

In a further embodiment of any of the foregoing, a vacuum device is configured to apply a vacuum pressure to a molded article received within the bladder while within the mold.

In a further embodiment of any of the foregoing, the pressure application device is configured to apply pressure to fluid within the bladder in a cyclic manner.

In a further embodiment of any of the foregoing, the pressure application device is configured to apply pressure to the fluid with the bladder in a static manner.

Although the different examples have the specific components shown in the illustrations, embodiments of this disclosure are not limited to those particular combinations. It is possible to use some of the components or features from one of the examples in combination with features or components from another one of the examples.

These and other features disclosed herein can be best understood from the following specification and drawings, the following of which is a brief description.

### BRIEF DESCRIPTION OF THE DRAWINGS

Figure 1 is a schematic view of an example flexible resin transfer molding tool.
Figure 2 is a schematic view of an example bladder for the disclosed resin transfer and polymer infiltration process.
Figure 3 is a schematic representation of a disclosed method of resin transfer molding and polymer infiltration and pyrolysis to form a ceramic article.

### DETAILED DESCRIPTION

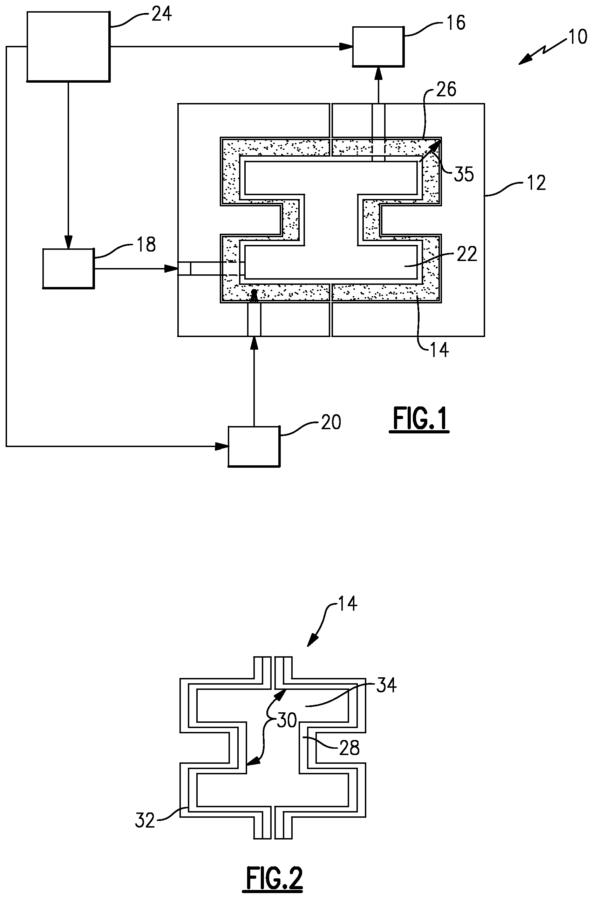

Referring to Figure 1, an example resin transfer molding tool for polymer infiltration and pyrolysis operation includes a mold 12 that defines an internal cavity 26 that receives a ceramic article 22 that is enclosed within an inflatable bladder 14. The inflatable bladder 14 fills gaps 35 between the outer geometry and shape of the ceramic article 22 and the part cavity 26 defined by the mold 12.

The mold 12 includes conduits that communicate resin as is indicated schematically at 16 and that provide a vacuum into the part cavity 26 to remove air to allow for the better infusion of resin into the ceramic article 22. The example tool 12 also includes a pumping device 20 that fills the bladder 14 to provide the desired pressure against the exterior surfaces of the ceramic article 22 and provide the pressure infusion of resin 18. A controller 24 is provided to control the resin impregnation 18, filling of the bladder by the pump 20, and the vacuum source 16.

Referring to Figure 2 with continued reference to Figure 1, an example bladder 14 is illustrated and defines an internal part cavity 34 that receives the ceramic article 22. The bladder 14 includes an internal cavity 28 that is fillable with a liquid such as a pre-ceramic resin utilized to exert a pressure force on the external surfaces of the ceramic article 22. The internal cavity 34 includes internal surfaces 30 that engage the exterior surfaces of a ceramic article 22. The bladder 14 also may include a reinforcement structure 32 to define a general overall shape that corresponds with the desired ceramic article geometry.

The bladder 14 is configured to receive liquid materials, such as a pre-ceramic resin, communicated by the pump 20. Pre-ceramic resin is utilized to fill the bladder and apply pressure against the ceramic article 22 to hold resin 18 within the ceramic article 22. The bladder 14 conforms to the ceramic article 22 to enable use of a common tool 12 while accommodating part to part variation caused by the various heat treating processes executed during fabrication of the ceramic article 22. In this example, the bladder 14 is made from a silicon rubber or similar flexible material that is compatible with the temperatures required for the low temperature curing conducted within the mold tool 12.

In traditional resin transfer molding operations, the ceramic article is formed within a first mold by infusing resin into a fiber pre-mold. Once the fiber pre-mold is impregnated with the desired amount of resin, it is cured for a predetermined time to form a pre-ceramic polymer. Curing within the first mold occurs at a relatively low temperature of between 100°C and 200°C. The pre-ceramic polymer soaked pre-form is then completed in during a pyrolysis operation where the pre-ceramic polymer is treated at very high temperatures to transform the pre-ceramic polymer to a ceramic material. The temperatures are typically between 850°C and 1800°C. The high temperatures encountered during the pyrolysis operation can distort the resulting ceramic article. Distortions of the ceramic article are not typically uniform or substantially repeatable and therefore prevent the reuse and reinsertion of the pyrolized ceramic article into the original mold tool. This is because the original tool is a rigid structure and cannot accommodate the variations in geometry that occur during processing between various ceramic articles.

Moreover, after the pyrolysis operation, substantial voids and porosity may be encountered within the initial ceramic article. The repeated polymer infiltration and pyrolysis operations typically utilized to increase the density and reduce the porosity of a ceramic article only increase the deformation of the ceramic part. Moreover, the polymer infusion and pyrolysis process can be inefficient because a substantial amount of the liquid resin is not capable of being maintained within the ceramic article during the pyrolysis operation.

The example device and method utilizes the fluid filled bladder 14 to accommodate and fill gaps 35 between the ceramic article 22 and the internal surfaces of the mold tool 12 to allow for reinsertion of a pyrolized ceramic article back into an example second mold tool 12. The bladder 14 is filled with a liquid material that can be utilized to exert a desired pressure against the surfaces of the ceramic article 22 to maintain the resin within the voids, cracks and other openings within the ceramic article 22 during an initial curing process. The bladder 14 maintains a pressure against surfaces of the ceramic article 22 until completion of the curing process. Because a substantial amount of the resin can be maintained within the ceramic article 22 that is encased within the fillable bladder 14, the number of repeated cycles required to obtain a ceramic article 22 of a desired density can be substantially improved.

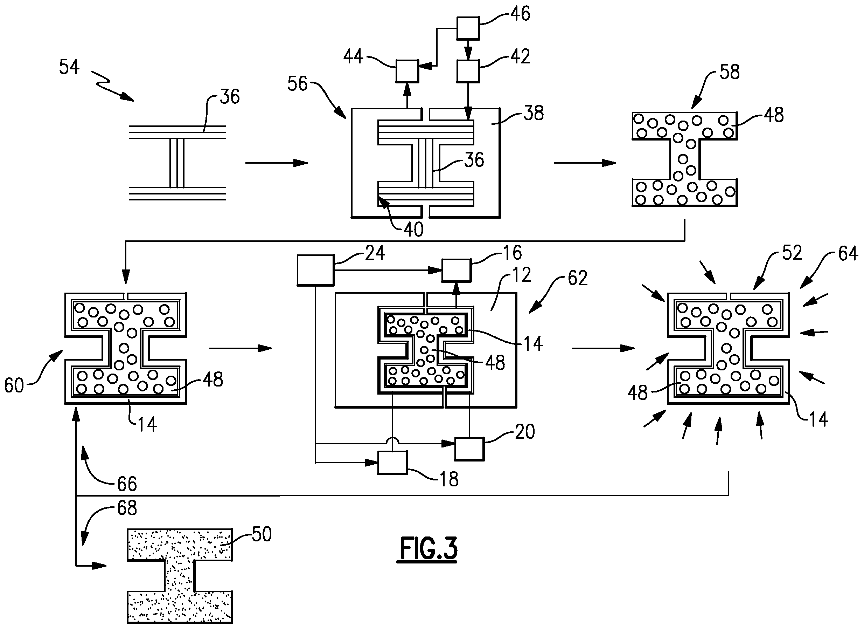

Referring to Figure 3 with continued reference to Figure 1, the example method 54 begins with a fiber pre-form 36 inserted into a first mold 38. The first mold 38 includes a cavity 40 that defines a desired initial geometry and shape of a completed ceramic article. The first mold 38 includes a vacuum source 44 and a resin injection device 42 that is controlled by a controller 46. As appreciated, although a vacuum source 44 is disclosed; other processes that do not utilize a vacuum are within the contemplation of this disclosure for the initial resin impregnation of the pre-form 36.

Within the first mold 38, as is indicated schematically at 56, resin is impregnated into the pre-form 36 and allowed to cure to form the pre-ceramic polymer. The pre-ceramic polymer impregnated pre-form 36 is then removed from the first mold 38. Subsequently the pre-ceramic polymer impregnated preform, 36, is processed at elevated temperatures 58, into a ceramic article 48.

The ceramic article 48 is then installed into the bladder 14 as is indicated at step 60. The bladder 14 and ceramic article 48 are then inserted into the second mold 12 that includes an inner cavity 26 that is larger than the cavity 40 of the first mold. The larger inner cavity 26 provided by the second mold 12 accommodates the bladder 14 along with variations in the ceramic article 48. The bladder 14 is fillable to fill any gaps 35 that may exist between the internal surfaces of the cavity 26 defined by the mold tool 12 and the ceramic article 22.

Once the bladder 14 and ceramic article 48 are inserted into the second mold 12, a resin impregnation process is executed where resin from a resin source 18 is injected into the ceramic article 48 under pressure. A vacuum may be applied to the ceramic article 48 from the vacuum source 16 to draw resin into the ceramic part 48 and fill any cracks and voids that may exist within the initial ceramic article 48.

The bladder 14 is filled with a fluid that is compatible with the temperatures incurred during the resin impregnation process. In one example, the bladder 14 is filled with resin to exert pressure on the external surfaces of the ceramic article 22 to force and hold resin into the cracks and voids. The resin may be pumped into the bladder 14 at an increasing pressure until a desired static pressure is obtained and maintained at that desired static pressure.

In another example, resin is pumped into the bladder 14 in a cyclical manner to provide a pumping action that further infuses resin into cracks, openings and voids in external surfaces of the ceramic article 48. The cyclical pressure exerted by the pump 20 and, thereby, on the surfaces of the bladder 14 on the external surfaces of the ceramic article 48 aid in resin flow through the part with or without the aid of the vacuum applied by the vacuum source 16. The cyclical pumping action provided by the bladder 14 can provide significant improvements in resin impregnation during the initial load temperature curing process executed as schematically indicated at 62 within the second mold 12. Pressure exerted by the bladder 14 is maintained until the resin is cured.

Once this initial and subsequent resin impregnation and pre-ceramic polymer conversion process is complete, the ceramic article 48 and bladder 14 are removed from the second mold 12. Upon removal of the ceramic article 48, the resin that had been subsequently injected into the voids and cracks, and converted into pre-ceramic polymer, requires pyrolization to be converted into the desired ceramic material. The pyrolysis process as generally indicated at 64 includes high temperature heat treatment of the ceramic article 48 as is known in the art. In this example, the heat treatment process 64 exerts a heat indicated schematically by arrows 52 on to the ceramic article 48. The heat treatment process indicated at 64 can be conducted with the bladder 14 remaining on the part, such that the bladder 14 will encounter the extreme heat and be destroyed such that it may be removed after the pyrolysis process.

The bladder 14 may also be removed prior to the pyrolysis operation and reused. The bladder 14 is removed from the ceramic article 48 prior to the pyrolysis operation, such that it may be reused for this part or another ceramic article in subsequent resin injection processes as are schematically shown at 62. A vacuum may be applied to the bladder 14 to aid in removal from the ceramic article 48.

In another example, the bladder 14 is destroyed during the heat treatment or pyrolysis process and a second or subsequent bladder is utilized for subsequent processes.

Once the pyrolysis process 64 is complete, the part may undergo a repeated pyrolysis operation as is indicated at 66 to repeat the resin injection in the second mold 12 with a bladder 14 to infuse resin into any remaining cracks, voids and pores. The process can be repeated as is indicated at 66 until a ceramic article of a desired density and porosity is achieved as is indicated at 68 to achieve a completed ceramic article 50.

Accordingly, the example device and method allows resin injection pressures and vacuum that is in excess of atmospheric pressures to fill the deep voids, pores and cracks within a ceramic article after an initial resin injection and pyrolysis process.

Although an example embodiment has been disclosed, a worker of ordinary skill in this art would recognize that certain modifications would come within the scope of this disclosure. For that reason, the following claims should be studied to determine the scope and content of this disclosure.

## Claims

1. A resin transfer molding tool comprising:
a mold (12) defining an internal cavity (34) of a fixed geometry; and
a bladder (14) configured to be received within the internal cavity (34) and define a flexible interface surface for surrounding a molded article, wherein the bladder (14) is fillable with a fluid material to exert a pressure on a surface of the molded article within the mold (12).

2. The resin transfer molding tool as recited in claim 1, wherein the internal cavity (34) is larger than the desired completed molded article in at least one dimension and the bladder (14) is configured to fill any gap between the internal cavity (34) and a molded article.

3. The resin transfer molding tool as recited in claim 2, including a resin injecting device configured for injecting resin into a molded article within the bladder (14) and mold (12).

4. The resin transfer molding tool as recited in claim 3, including a vacuum device configured to apply a vacuum pressure to a molded article received within the bladder (14) while within the mold (12).

5. The resin transfer molding tool as recited in any preceding claim, including a pressure application device for applying a pressure to fluid within the bladder when received within the mold.

6. The resin transfer molding tool as recited in claim 5, where the pressure application device is configured to apply pressure to fluid within the bladder (14) in a cyclic manner, or wherein the pressure application device is configured to apply pressure to the fluid with the bladder (14) in a static manner.

7. The resin transfer molding tool as recited in any preceding claim, wherein the bladder (14) is configured to receive the molded article before insertion into the mold (12).

8. The resin transfer molding tool as recited in any preceding claim, wherein the bladder (14) includes a reinforcement element defining a desired geometry of the bladder (14).

9. The resin transfer molding tool as recited in any preceding claim, wherein the fluid within the bladder is a pre-ceramic resin.

10. A flexible resin transfer tool comprising:
a first mold (38) including a first internal cavity (40) for receiving a pre-mold and infusing resin into the pre-mold to form a ceramic article (48);
a second mold (12) defining a second internal cavity (26) including a fixed geometry;
a bladder (14) receivable within the second internal cavity (26) that defines a part cavity for receiving the ceramic article (48), wherein the bladder (14) includes a variable internal and external geometry for filling gaps between the second internal cavity (26) and the ceramic article (48); and
a resin injection device (42) for injecting resin into voids in the ceramic article (48) within the bladder (14) and the second internal cavity.

11. The flexible resin transfer tool as recited in claim 10, wherein bladder (14) is fillable with a pre-ceramic resin for applying a pressure to a surface of the ceramic article (48) to hold uncured resin within the ceramic article (48) until cured.

12. The flexible resin transfer tool as recited in claims 10 or 11, including a pressure application device for applying a pressure to fluid within the bladder (14) when received within the mold.

13. The flexible resin transfer molding tool as recited in claims 10, 11 or 12, including a vacuum device configured to apply a vacuum pressure to a molded article received within the bladder (14) while within the mold.

14. The flexible resin transfer molding tool as recited in claim 12, where the pressure application device is configured to apply pressure to fluid within the bladder (14) in a cyclic manner.

15. The flexible resin transfer molding tool as recited in claim 12, wherein the pressure application device is configured to apply pressure to the fluid with the bladder (14) in a static manner.

## Patentansprüche

1. Harztransferformwerkzeug, umfassend:
eine Form (12), die einen Innenhohlraum (34) mit einer festen Geometrie definiert; und
eine Blase (14), die dazu konfiguriert ist, in den Innenhohlraum (34) aufgenommen zu werden und eine flexible Grenzfläche zum Umhüllen eines Formteils zu definieren, wobei die Blase (14) mit einem Fluidmaterial gefüllt werden kann, um einen Druck auf eine Fläche des Formteils in der Form (12) zu beaufschlagen.

2. Harztransferformwerkzeug nach Anspruch 1, wobei der Innenhohlraum (34) in mindestens einer Dimension größer ist als das gewünschte fertige Formteil und die Blase (14) dazu konfiguriert ist, etwaige Lücken zwischen dem Innenhohlraum (34) und einem Formteil auszufüllen.

3. Harztransferformwerkzeug nach Anspruch 2, beinhaltend eine Harzeinspritzvorrichtung, die dazu konfiguriert ist, Harz in ein Formteil in der Blase (14) und der Form (12) einzuspritzen.

4. Harztransferformwerkzeug nach Anspruch 3, beinhaltend eine Unterdruckvorrichtung, die dazu konfiguriert ist, einen Unterdruck auf ein Formteil zu beaufschlagen, das in die Blase (14) aufgenommen ist, während es sich in der Form (12) befindet.

5. Harztransferformwerkzeug nach einem der vorhergehenden Ansprüche, beinhaltend eine Druckbeaufschlagungsvorrichtung zum Beaufschlagen eines Drucks auf ein Fluid in der Blase (14), wenn diese in die Form aufgenommen ist.

6. Harztransferformwerkzeug nach Anspruch 5, wobei die Druckbeaufschlagungsvorrichtung dazu konfiguriert ist, zyklisch Druck auf das Fluid in der Blase (14) zu beaufschlagen, oder wobei die Druckbeaufschlagungsvorrichtung dazu konfiguriert ist, statisch Druck auf das Fluid in der Blase (14) zu beaufschlagen.

7. Harztransferformwerkzeug nach einem der vorhergehenden Ansprüche, wobei die Blase (14) dazu konfiguriert ist, das Formteil aufzunehmen, bevor sie in die Form (12) eingeführt wird.

8. Harztransferformwerkzeug nach einem der vorhergehenden Ansprüche, wobei die Blase (14) ein Verstärkungselement beinhaltet, das eine gewünschte Geometrie der Blase (14) definiert.

9. Harztransferformwerkzeug nach einem der vorhergehenden Ansprüche, wobei das Fluid in der Blase ein präkeramisches Harz ist.

10. Flexibles Harztransferwerkzeug, umfassend:
eine erste Form (38), einschließlich eines ersten Innenhohlraums (40), zum Aufnehmen eines Vorformlings und zum Eingießen von Harz in den Vorformling zum Ausbilden eines Keramikteils (48);
eine zweite Form (12), die einen zweiten Innenhohlraum (26) definiert, der eine feste Geometrie beinhaltet;
eine Blase (14), die in den zweiten Innenhohlraum (26) aufgenommen werden kann und einen Teilhohlraum zum Aufnehmen des Keramikteils (48) definiert, wobei die Blase (14) eine variable innere und äußere Geometrie beinhaltet, um Lücken zwischen dem zweiten Innenhohlraum (26) und dem Keramikteil (48) zu füllen; und
eine Harzeinspritzvorrichtung (42) zum Einspritzen von Harz in Hohlräume im Keramikteil (48) in der Blase (14) und dem zweiten Innenhohlraum.

11. Flexibles Harztransferwerkzeug nach Anspruch 10, wobei die Blase (14) mit einem präkeramischen Harz gefüllt werden kann, um einen Druck auf eine Fläche des Keramikteils (48) zu beaufschlagen, um ungehärtetes Harz im Keramikteil (48) zu halten, bis es ausgehärtet ist.

12. Flexibles Harztransferwerkzeug nach Anspruch 10 oder 11, beinhaltend eine Druckbeaufschlagungsvorrichtung zum Beaufschlagen eines Drucks auf Fluid in der Blase (14), wenn diese in die Form aufgenommen ist.

13. Flexibles Harztransferwerkzeug nach Anspruch 10, 11 oder 12, beinhaltend eine Unterdruckvorrichtung, die dazu konfiguriert ist, einen Unterdruck auf ein Formteil zu beaufschlagen, das in die Blase (14) aufgenommen ist, während es sich in der Form befindet.

14. Flexibles Harztransferwerkzeug nach Anspruch 12, wobei die Druckbeaufschlagungsvorrichtung dazu konfiguriert ist, zyklisch Druck auf Fluid in der Blase (14) zu beaufschlagen.

15. Flexibles Harztransferwerkzeug nach Anspruch 12, wobei die Druckbeaufschlagungsvorrichtung dazu konfiguriert ist, statisch Druck auf Fluid in der Blase (14) zu beaufschlagen.

## Revendications

1. Outil de moulage par transfert de résine comprenant :
un moule (12) définissant une cavité interne (34) d'une géométrie fixe ; et
une vessie (14) configurée pour être reçue à l'intérieur de la cavité interne (34) et définir une surface d'interface souple pour entourer un article moulé, dans lequel la vessie (14) peut être remplie d'une matière fluide pour exercer une pression sur une surface de l'article moulé à l'intérieur du moule (12).

2. Outil de moulage par transfert de résine selon la revendication 1, dans lequel la cavité interne (34) est plus grande que l'article moulé complet souhaité dans au moins une dimension et la vessie (14) est configurée pour remplir tout espace entre la cavité interne (34) et un article moulé.

3. Outil de moulage par transfert de résine selon la revendication 2, comprenant un dispositif d'injection de résine configuré pour injecter de la résine dans un article moulé à l'intérieur de la vessie (14) et du moule (12).

4. Outil de moulage par transfert de résine selon la revendication 3, comprenant un dispositif de vide configuré pour appliquer une pression de vide à un article moulé reçu à l'intérieur de la vessie (14) pendant qu'elle est à l'intérieur du moule (12).

5. Outil de moulage par transfert de résine selon une quelconque revendication précédente, comprenant un dispositif d'application de pression pour appliquer une pression à un fluide à l'intérieur de la vessie lorsqu'elle est reçue à l'intérieur du moule.

6. Outil de moulage par transfert de résine selon la revendication 5, dans lequel le dispositif d'application de pression est configuré pour appliquer une pression à un fluide à l'intérieur de la vessie (14) de manière cyclique, ou dans lequel le dispositif d'application de pression est configuré pour appliquer une pression au fluide avec la vessie (14) de manière statique.

7. Outil de moulage par transfert de résine selon une quelconque revendication précédente, dans lequel la vessie (14) est configurée pour recevoir l'article moulé avant insertion dans le moule (12).

8. Outil de moulage par transfert de résine selon une quelconque revendication précédente, dans lequel la vessie (14) comprend un élément de renforcement définissant une géométrie souhaitée de la vessie (14).

9. Outil de moulage par transfert de résine selon une quelconque revendication précédente, dans lequel le fluide à l'intérieur de la vessie est une résine précéramique.

10. Outil de transfert de résine souple comprenant :
un premier moule (38) comprenant une première cavité interne (40) pour recevoir un pré-moule et infuser de la résine dans le pré-moule pour former un article céramique (48) ;
un deuxième moule (12) définissant une deuxième cavité interne (26) comprenant une géométrie fixe ;
une vessie (14) recevable à l'intérieur de la deuxième cavité interne (26) qui définit une cavité partielle pour recevoir l'article céramique (48), dans lequel la vessie (14) comprend une géométrie interne et externe variable pour remplir les espaces entre la deuxième cavité interne (26) et l'article céramique (48) ; et
un dispositif d'injection de résine (42) pour injecter de la résine dans des espaces vides dans l'article céramique (48) à l'intérieur de la vessie (34) et la deuxième cavité interne.

11. Outil de transfert de résine souple selon la revendication 10, dans lequel la vessie (14) peut être remplie d'une résine précéramique pour appliquer une pression à une surface de l'article céramique (48) pour maintenir une résine non traitée à l'intérieur de l'article céramique (48) jusqu'à ce qu'elle soit traitée.

12. Outil de transfert de résine souple selon les revendications 10 ou 11, comprenant un dispositif d'application de pression pour appliquer une pression à un fluide à l'intérieur de la vessie (14) lorsqu'elle est reçue à l'intérieur du moule.

13. Outil de moulage par transfert de résine souple selon les revendications 10, 11 ou 12, comprenant un dispositif de vide configuré pour appliquer une pression de vide à un article moulé reçu à l'intérieur de la vessie (14) lorsqu'elle est à l'intérieur du moule.

14. Outil de moulage par transfert de résine souple selon la revendication 12, dans lequel le dispositif d'application de pression est configuré pour appliquer une pression à un fluide à l'intérieur de la vessie (14) de manière cyclique.

15. Outil de moulage par transfert de résine souple selon la revendication 12, dans lequel le dispositif d'application de pression est configuré pour appliquer une pression au fluide avec la vessie (14) de manière statique.
